# EUROPÄISCHE PATENTSCHRIFT

(11) **EP 3 458 286 B1**
(45) Veröffentlichungstag und Bekanntmachung des Hinweises auf die Patenterteilung: **08.04.2020**
(21) Anmeldenummer: 17708204.7
(22) Anmeldetag: 28.02.2017
(51) Int. Cl.: B60C 11/16

(54) **SPIKE FÜR EINEN FAHRZEUGLUFTREIFEN UND VERFAHREN ZUR HERSTELLUNG EINES SPIKES**
STUD FOR A PNEUMATIC VEHICLE TYRE, AND METHOD FOR PRODUCING A STUD
CLOU POUR UN PNEUMATIQUE DE VÉHICULE ET PROCÉDÉ DE FABRICATION D'UN CLOU

(30) Priorität: 17.05.2016 DE 102016208386
(43) Veröffentlichungstag der Anmeldung: 27.03.2019
(73) Patentinhaber: Continental Reifen Deutschland GmbH, 30165 Hannover (DE)
(72) Erfinder: BERGER, Christoph, 30173 Hannover (DE); SCHLITTENHARD, Jan, 30900 Wedemark (DE); GASSNER, Friedrich, 93183 Holzheim (DE)
(74) Vertreter: Finger, Karsten
(86) Internationale Anmeldenummer: PCT/EP2017/054544
(87) Internationale Veröffentlichungsnummer: WO 2017/198352

(56) Entgegenhaltungen:
- DE-A1- 2 202 373
- NL-C2- 2 001 198

## Beschreibung

Die Erfindung betrifft einen Spike und ein Verfahren zur Herstellung eines Spikes für einen Fahrzeugluftreifen mit einem Spikekörper aus einem Verstärkungsfasern enthaltenden Kunststoff und einem im Spikekörper positionierten, aus dem Spikekörper herausragenden Spikepin aus Hartmetall, wobei der Spikekörper einen Hauptkörperteil und einen den Hauptkörperteil seitlich überragenden Fußteil aufweist.

Es ist bekannt und üblich, Fahrzeugluftreifen mit Spikes auszustatten, um bei winterlichen Fahrbedingungen die Kraftübertragung des Reifens auf schnee- und/oder eisbedeckten Fahrbahnen zu erhöhen. Die Spikes setzen sich aus einem Spikekörper und einem in diesem positionierten und aus diesem herausragenden Spikepin zusammen. Insbesondere der Spikekörper kann aus unterschiedlichen Materialien gefertigt sein, wobei bei der Materialwahl im Allgemeinen ein geringes Spikekörpergewicht sowie geringe Materialkosten für den Spikekörper im Vordergrund stehen. Insbesondere kann der Spikekörper aus einem Kunststoff gefertigt sein, welcher Verstärkungsfasern enthält, die dem fertigen Spikekörper eine hohe Festigkeit verleihen. Solche Spikekörper sind bereits seit Längerem bekannt.

Ein Spike der eingangs genannten Art ist beispielsweise aus der DE 2 111 682 A bekannt. Bei der Spikeherstellung wird der Spikepin in eine Aussparung des bereits hergestellten Spikekörpers eingetrieben, wobei die Höhe des im Spikekörper sitzenden Teiles des Spikpins maximal der Hälfte der Pinhöhe entspricht. Dem Kunststoff des Spikekörpers können zur Erhöhung seiner Härte Glasfasern zugesetzt sein. Ferner ist im Spikekörper ein den Spikepin umgebender spiralförmiger Draht eingearbeitet. Dieser Draht soll den Spikepin, welcher beim Abreiben des Spikekörpers in diesen tiefer hineingetrieben wird, fortlaufend festhalten.

Der aus der DE 26 23 754 A bekannte Spike weist einen aus Wolframcarbid bestehenden Spikepin mit einem Sägezahnprofil und einen aus einer Metalllegierung bestehenden Spikekörper auf. Der Spikekörper wird durch Umformen der Metalllegierung am Spikepin aufgebracht.

Aus der WO 01/032449 A1 ist ein Spike mit einem Spikepin und einem Spikekörper, welcher einen Hauptkörperteil, einen im Wesentlichen zylindrischen Mittelteil und einen aus Kunststoff bestehenden Fußteil aufweist, bekannt. Der mittels Spritzguss gefertigte Fußteil und der Mittelteil werden an einer im Wesentlichen unterhalb des Spikepins angeordneten Hülse fixiert und der Spikepin anschließend in den Hauptkörperteil eingepresst. Im fertigen Spike ragt der Spikepin etwa bis zur Mitte des Spikekörpers.

Der aus der DE 1 529 988 A1 bekannte Spike weist einen Spikepin aus Hartmetall auf, um welchen ein Stützteil bestehend aus vier sich gegenüber der Spikeachse radial nach außen erstreckenden Rippen angeordnet ist. Der Stützteil ist seinerseits von einem Spikekörper umgeben und soll den Spikekörper sowie den Spikepin stützen und verstärken, sodass eine Bewegung des Spikes im Laufstreifen um seine Spikeachse verhindert werden soll. Der Stützteil besteht vorzugsweise aus Kunststoff und wird durch Spritzguss um den Spikepin gebildet.

Ein mittels Gieß- oder Pressverfahren gefertigter Spike, welcher aus einem mit Füllstoffen, wie Sand und/oder Glasfasern, versetzten Epoxidharz gefertigt ist, ist aus der DE 2 165 744 A1 bekannt. Der aus der DE 22 48 249 A1 bekannte Spike weist mehrere Spikepins sowie einen aus Gummi oder Kunststoff bestehenden Spikekörper auf, welcher bei der Spikeherstellung um die Spikepins pressgeformt wird. Aus der EP 0 037 576 B1 ist ein Spike mit einem Spikekörper, welcher einen keramischen Hauptkörperteil sowie einen diesen umgebenden und gleichzeitig einen Fußteil bildenden Kunststoffteil aufweist, bekannt. Ein weiterer Spike mit einem Kunststoffkörper und einem metallischen Spikepin ist aus der US 3 747 659 bekannt. An der Innenseite des Kunststoffkörpers ist eine gewindeähnliche Struktur ausgebildet, in welche der Spikepin beim Fahren durch das Abreiben des Kunststoffspikekörpers schrittweise hineingedrückt wird.

Die DE 22 02 373 A1 offenbart ein Verfahren zur Herstellung eines Spikes mit einem Spikekörper aus Kunststoff und einem Spikepin aus Hartmetall. Der Spikekörper ist durch Spritzguss, Extrusion oder Pressen hergestellt, besteht aus einem Plastomer, einem Duromer oder einem Elastomer und weist einen Hohlraum zur Aufnahme des Spikepins auf. Der Spikepin ist vorzugsweise mit umlaufenden Vertiefungen versehen. Mittels Ultraschallschwingungen wird der Spikepin in den Spikekörper eingefügt.

Aus der NL 2 001 198 C2 ist ferner ein Spike bekannt, welcher einen Spikekörper aus einem biologisch abbaubaren Kunststoff und aus einem Spikepin besteht. Der Durchmesser des Spikepins nimmt, ausgehend von seinem aus dem Spikeköper herausragenden Pinabschnitt, ins Innere des Spikekörpers ab. Alternativ kann der Spikepin mit Verankerungselementen versehen sein.

Es ist daher grundsätzlich bekannt, Spikes mit Kunststoffkörpern herzustellen. Dabei werden üblicherweise der Spikekörper und der Spikepin getrennt voneinander gefertigt und anschließend der Spikepin in eine im Spikekörper ausgebildete, sich ins Innere verjüngende Vertiefung eingepresst. Die Haltekräfte des Spikepins im Spikekörper resultieren daher lediglich aus einer kraftschlüssigen Verbindung, daher durch Presssitz. Dieser Presssitz kann sich durch die beim Fahren auftretenden Belastungen, insbesondere durch die Kerbwirkung des Spikepins im Spikekörper, leicht lockern, sodass der Spikepin aus dem Spikekörper ausbricht. Spikekörper aus Kunststoff weisen zudem gegenüber metallischen Spikekörpern eine deutlich geringere Verschleißfestigkeit auf.

Der Erfindung liegt daher die Aufgabe zugrunde, einen einfach aufgebauten Spike mit einem Kunststoffkörper zur Verfügung zu stellen, welcher die Nachteile bekannter Spikes mit Kunststoffkörpern nicht aufweist, insbesondere eine hohe Verschleißfestigkeit besitzt und einen etwaigen Verlust des Spikepins zuverlässig verhindert. Der Erfindung liegt auch die Aufgabe zugrunde, ein Verfahren zur Verfügung zu stellen, mit welchem ein derartiger Spike auf einfache und rationelle Weise herstellbar ist.

Die gestellte Aufgabe wird erfindungsgemäß mit einem Spike gelöst, bei welchem der Spikepin im Spikekörper im Wesentlichen bis zum Niveau des Fußteiles reicht und einen Pinschaft mit zumindest einem Verankerungselement aufweist, welches den radial inneren Endbereich des Pinschaftes verbreitert, wobei die Verstärkungsfasern im zentralen Bereich des Fußteiles hauptsächlich und im Wesentlichen senkrecht zum Spikepin ausgerichtet sind und im Hauptkörperteil hauptsächlich orientierungslos angeordnet sind.

Was das Verfahren betrifft, wird die gestellte Aufgabe erfindungsgemäß dadurch gelöst, dass ein Spikepin, welcher zumindest ein an seinem radial inneren Endbereich ausgebildetes und den Spikepin überragendes Verankerungselement aufweist, in einer gemäß dem herzustellenden Spikekörper ausgebildeten Formkavität einer Gussform positioniert wird, wobei der in der geschlossenen Gussform positionierte Spikepin im Wesentlichen bis zum den Fußteil ausformenden Bereich der Formkavität reicht, wobei anschließend ein Verstärkungsfasern enthaltendes flüssiges Kunststoffmaterial im Wesentlichen senkrecht zum Spikepin an der Randmitte des den Fußteil bildenden Formkavitätsbereiches eingespritzt wird,wobei das Kunststoffmaterial den den Fußteil bildenden Formkavitätsbereich laminar und den den Hauptkörperteil ausformenden Bereich der Formkavität im Wesentlichen turbulent durchströmt und dabei auffüllt.

Erfindungsgemäße Spikes weisen daher zumindest am inneren Endbereich ihres Spikepins zumindest ein Verankerungselement auf, welches vollständig von dem aus faserverstärktem Kunststoff gefertigten Spikekörper umgeben ist. Da das Verankerungselement den Durchmesser des Spikepins lokal vergrößert sind der Spikepin und der Spikekörper über einen dauerhaltbaren Formschluss miteinander verbunden. Ein besonders fester Sitz des Spikepins im Spikekörper ist daher gewährleistet, sodass ein Ausbrechen des Spikepins aus dem Spikekörper auch unter starker Belastung verhindert wird. Die im zentralen Bereich des Fußteiles hauptsächlich senkrecht zum Spikepin ausgerichteten Verstärkungsfasern verleihen dem Fußteil eine maximale Druckfestigkeit gegenüber den beim Fahren auf ihn wirkenden statischen und dynamischen Axialkräften (Druckkräfte). Die weitgehend orientierungslos angeordneten Fasern im Hauptkörperteil verleihen diesem isotrope, d.h. richtungsunabhängige Werkstoffeigenschaften, sodass die beim Fahren aus unterschiedlichen Richtungen auf den Hauptkörperteil wirkenden Stoß- und Scherbelastungen optimal abgefangen werden. Erfindungsgemäße Spikes sind daher bedarfsgerecht und optimal verstärkt.

Mit dem erfindungsgemäßen Verfahren gelingt es, solche Spikes auf besonders einfache und rationelle Weise herzustellen. Dabei ist es wesentlich, dass der gesamte Spikekörper durch Einspritzen eines Verstärkungsfasern enthaltenden Kunststoffmaterials hergestellt wird, sodass er "in einem einzigen Guss" sowie in seiner endgültigen Form direkt um den Spikepin herum gefertigt wird. Dadurch werden Spikepin und Spikekörper formschlüssig miteinander verbunden. Das zumindest eine Verankerungselement des Spikepins und der speziell gewählte Anspritzpunkt des Kunststoffmaterials bewirken gezielte Verwirbelungen in dem den Spikepin umströmenden Kunststoff, sodass dieser den Spikepin turbulent umströmt und sich die Verstärkungsfasern im späteren Hauptkörperteil orientierungslos anordnen und dem fertigen Spikekörper die bereits beschriebenen gewünschten Eigenschaften verleihen. Der Bereich unterhalb des Spikepins wird vom Kunststoffmaterial laminar durchströmt, sodass die Fasern im fertigen Fußteil im Wesentlichen senkrecht bzw. unter spitzen Winkeln zum Spikepin ausgerichtet sind.

Es gibt eine Vielzahl von Möglichkeiten, Verankerungselemente am Pinschaft auszubilden, die gemeinsam mit den speziell ausgerichteten Verstärkungsfasern einen besonders festen Sitz des Spikepins gewährleisten. Die Ausgestaltung und die Anordnung der Verankerungselemente spielt auch eine Rolle bei dem Verfahren zur Herstellung erfindungsgemäßer Spikes, um die besondere Ausrichtung der Verstärkungsfasern zu begümstigen.

Grundsätzlich können gemäß einem Merkmal der Erfindung am Pinschaft mehrere Verankerungselemente ausgebildet sein. Bevorzugt ist eine Ausführung, bei der zumindest ein Verankerungselement vorgesehen ist, welches den Pinschaft umgibt bzw. umläuft.

Besonders vorteilhaft ist dabei eine Ausführungsvariante, bei der zumindest ein den Pinschaft umgebendes Verankerungselement vorgesehen ist, welches sich über seine Erstreckung entlang des Pinschaftes konisch verbreitert. Für einen guten Formschluss des Spikepins im Spikekörper ist es dabei ausreichend, wenn das sich konisch verbreiternde Verankerungselement eine Höhe von 10 % bis 15 % der Pinhöhe aufweist.

Bei einer sehr einfachen Ausführungsvariante der Erfindung ist zumindest ein sich konisch verbreiterndes Verankerungselement am Pinschaft vorgesehen, welches kegelstumpfförmig ausgebildet ist. Bevorzugt ist dabei ein derartiges, sich konisch verbreiterndes Verankerungselement am inneren Endbereich des Pinschaftes vorgesehen, wobei die Verbreiterung insbesondere in Richtung des inneren Endes des Pinschaftes erfolgt. Bei einer alternativen Ausführungsform der Erfindung sind am inneren Endbereich des Pinschaftes mehrere als Vorsprünge ausgebildete Verankerungselemente vorgesehen. Ausführungen, mit am inneren Endbereich des Pinschaftes ausgebildeten Verankerungselementen sind für einen besonders festen Sitz des Spikepins günstig.

Bei einer anderen erfindungsgemäßen Ausführung weist der Pinschaft mehrere Verankerungselemente auf, welche an der Außenseite des Pinschaftes ausgebildete, diesen umlaufende und abwechselnd vorgesehene, insbesondere gleich dimensionierte Erhebungen und Vertiefungen sind. Auf diese Weise wird dem Pinschaft eine Art gerippter Außenfläche bzw. eine balgartige Strukturierung verliehen. Bevorzugt ist dabei eine Ausführung, bei der der quer zur Erstreckung des Pinschaftes ermittelte Abstand zwischen der tiefsten Stelle der Vertiefungen und der höchsten Stelle der Erhebungen 0,2 mm bis 0,5 mm beträgt.

Der durch ein Spritzverfahren hergestellte Spikekörper kann aus einem Duroplast oder einem Thermoplast hergestellt sein. Zur Herstellung eignet sich eine Vielzahl der gängigen Duroplaste und Thermoplaste.

Als Verstärkungsfasern kann der Spikekörper gemäß der Erfindung organische Verstärkungsfasern, insbesondere Aramidfasern, Kohlenstofffasern, Polyesterfasern, Nylonfasern, Polyethylenfasern oder Plexiglasfasern enthalten, aber auch anorganische Verstärkungsfasern, wie beispielsweise Basaltfasern, Borfasern, Glasfasern, Keramikfasern oder Kieselsäurefasern. Sämtliche Fasertypen können auch in Kombination miteinander verwendet werden.

Zur Erhöhung der Druckfestigkeit des Spikekörpers kann dieser zusätzlich plättchen- oder kugelförmige Füllkörper oder Füllstoffe enthalten, beispielsweise mineralische Füllstoffe, wie Glimmer, Al₂O₃ oder Wollastonit.

Weitere Merkmale, Vorteile und Einzelheiten der Erfindung werden nun anhand der Zeichnung, die schematisch Ausführungsbeispiele der Erfindung darstellt, näher beschrieben. Dabei zeigen
Fig. 1 bis Fig. 4 jeweils schematisch einen Querschnitt durch eine Ausführungsvariante eines Spikes gemäß der Erfindung,
Fig. 5 bis Fig. 7 Ansichten einer Ausführungsform eines Spikepins,
Fig. 8 schematisch einen Querschnitt durch einen Spike gemäß Fig. 2 während seiner Herstellung und
Fig. 9 schematisch einen Querschnitt durch einen Spike gemäß Fig. 4 während seiner Herstellung.

In der nachfolgenden Beschreibung verwendete Begriffe wie oben, unten, innen, außen, senkrecht, waagrecht und dergleichen beziehen sich auf die Lage der einzelnen Bestandteile des Spikes wie in den Figuren gezeigt.

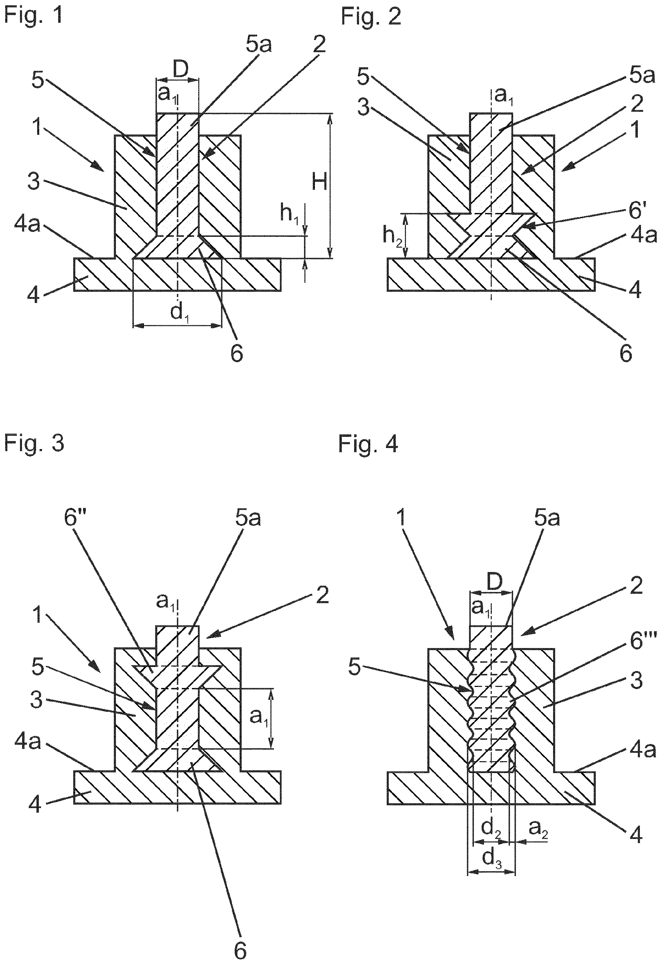

Die in Fig. 1 bis Fig. 4 gezeigten Spikes weisen jeweils einen aus faserverstärktem Kunststoff bestehenden Spikekörper 1 und einen in diesem eingebetteten, vorzugsweise aus Hartmetall bestehenden Spikepin 2 auf. Der Spikekörper 1 setzt sich aus einem Hauptkörperteil 3 und einem Fußteil 4 zusammen, wobei diese Teile 3, 4 bei den gezeigten vereinfachten Ausführungsbeispielen bezüglich der Spikeachse a₁ jeweils eine rotationssymmetrische Geometrie aufweisen und zylindrisch gestaltet sind. Der Fußteil 4 besitzt einen größeren Durchmesser als der Hauptkörperteil 3 und weist eine obere bzw. radial äußere, den Hauptkörperteil 3 umlaufende Begrenzungsfläche 4a auf. Der Hauptkörperteil 3 und der Fußteil 4 können auch nicht rotationssymmetrische, beispielsweise im Querschnitt längliche oder ovale Teile sein. In Draufsicht längliche Spikekörper sind beispielsweise aus der WO 2012/107305 A1 bekannt.

Der in sämtlichen Figuren gezeigte Spikepin 2 weist einen Pinschaft 5 auf und überragt mit einem Schaftabschnitt 5a den Spikekörper 1. Abgesehen von jenen Bereichen, wo der Spikepin 2 mit Verankerungselementen 6, 6', 6", 6"', 6^{IV} versehen ist, kann er einen kreisförmigen Querschnitt mit einem vorzugsweise konstanten Durchmesser D von beispielsweise 2,0 mm bis 2,4 mm aufweisen. Der Spikepin 2 erstreckt sich im Hauptkörperteil 3 im Wesentlichen vom Niveau der radial äußeren Begrenzungsfläche 4a des Fußteiles 4 nach oben. Der Spikepin 2 kann ferner einen nicht rotationssymmetrisch gestalteten Pinschaft 5 aufweisen. Aus der WO 2015/139860 A1 sind beispielsweise in Draufsicht längliche Spikepins bzw. Pinschäfte bekannt.

Bei der in Fig. 1 gezeigten Ausführungsvariante weist der Pinschaft 5 ein an seinem inneren Endbereich ausgebildetes, vorzugsweise kegelstumpfförmiges Verankerungselement 6 auf, welches den Pinschaft 5 zu seinem radial inneren Ende konisch verbreitert. Das Verankerungselement 6 weist eine Höhe h₁ von 10% bis 15% der Pinhöhe H auf, seine auf dem Niveau der radial äußeren Begrenzungsfläche 4a des Fußteiles 4 befindliche Grundfläche weist einen Durchmesser d₁ > D von ca. 3,0 mm auf.

Der Spikepin 2 der in Fig. 2 gezeigten Ausführungsvariante weist an seinem radial inneren Endabschnitt ein doppeltkegelstumpfförmiges Verankerungselement 6' auf, dessen Höhe h₂ 20% bis 30% der Pinhöhe H beträgt. Das Verankerungselement 6' besteht beispielsweise aus zwei vorzugsweise übereinstimmend ausgeführten kegelstumpfförmigen Teilen 6 mit aufeinander liegenden Deckflächen, deren Durchmesser dem Durchmesser D des Pinschaftes 5 entspricht. Die beiden Teile 6 sind vorzugsweise jeweils analog zum Verankerungselement 6 der Fig. 1 ausgeführt.

Bei der in Fig. 3 gezeigten Ausführungsvariante weist der Pinschaft 5 zwei in einem Abstand a₁ voneinander angeordnete kegelstumpfförmige Verankerungselemente 6" auf. Der Abstand a₁ beträgt beispielsweise 20% bis 35% der Pinhöhe H. Die beiden Verankerungselemente 6" sind vorzugsweise derart orientiert, dass ihre "Mantelflächen" einander zugewandt sind und können jeweils übereinstimmend zu dem in Fig. 1 gezeigten kegelstumpfförmigen Verankerungselement 6 ausgeführt sein.

Fig. 4 zeigt einen Spike mit einem Spikepin 2, dessen im Spikekörper 1 befindlicher Abschnitt des Pinschaftes 5 Verankerungselemente 6"' aufweist, die an der Außenseite des Pinschaftes 5 ausgebildete, gerundet ausgeführte und abwechselnd angeordnete Erhebungen und Vertiefungen sind, welche im rechten Winkel zur Erstreckung des Pinschaftes 5 ausgebildet sind und bei einer bevorzugten Ausführung im Längsschnitt des Pinschaftes 5 aneinander anschließende Kreisbögen bilden. Diese Kreisbögen können gleich große oder unterschiedlich große Radien aufweisen. Alternativ kann die Außenseite des Pinschaftes 5 zickzack- oder sägezahnförmig strukturiert sein. An der tiefsten Stelle der Vertiefungen ist der Durchmesser d₂ des Spikepins 2 geringfügig kleiner als der Durchmessers D des Pinschaftes 5, an den höchsten Stellen der Erhebungen weisen die Verankerungselemente 6"' jeweils einen Durchmesser d₃ auf, welcher geringfügig größer ist als der Durchmessers D des Pinschaftes 5. Der quer zur Erstreckung des Pinschaftes 5 ermittelte Abstand a₂ zwischen der tiefsten Stelle der Vertiefungen und der höchsten Stelle der Erhebungen beträgt 0,2 mm bis 0,5 mm.

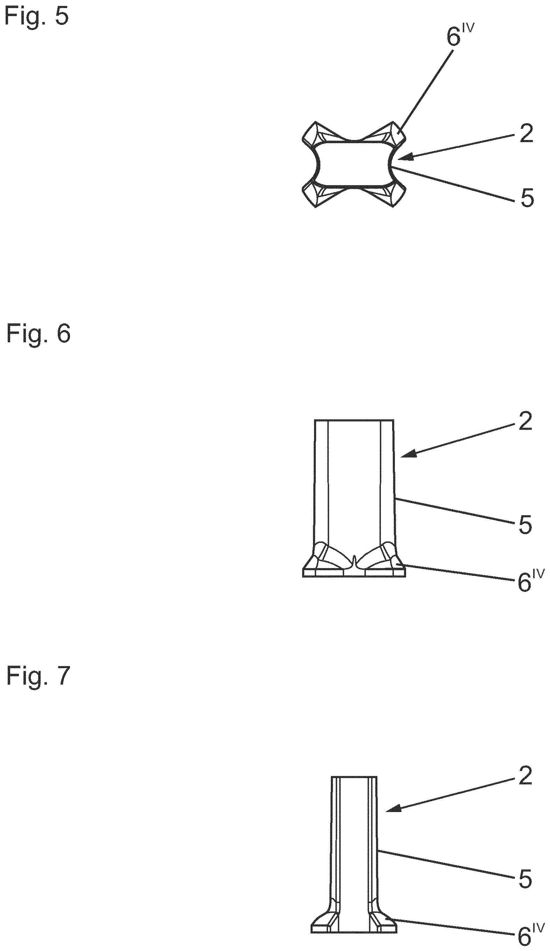

Fig. 5 bis 7 zeigen Ansichten eines Spikepins 2, dessen Pinschaft 5 im Querschnitt länglich ausgeführt ist. Der Pinschaft 5 weist im Querschnitt zwei einander gegenüberliegende Seiten auf, die eine größere Erstreckung aufweisen als die beiden weiteren gegenüberliegenden Seiten. Fig. 6 zeigt eine Ansicht einer der der breiteren Seiten, Fig. 7 eine Ansicht einer der der schmäleren Seiten des Spikepins. Bei der gezeigten Ausführung sind ferner jene Begrenzungswände des Pinschaftes 5, die den schmäleren Seiten zugeordnet sind, nach innen gewölbt. Am unteren Ende des Pinschaftes 5 sind vier Verankerungselemente 6^{IV} als von den Eckbereichen des Pinschaftes 5 abstehende Vorsprünge ausgebildet, vorzugsweise derart, dass der Spikepin 2 eine ebene Bodenfläche aufweist.

Zur Herstellung eines erfindungsgemäßen Spikes wird der jeweilige Spikepin 2 in eine gemäß dem herzustellenden Spikekörper 1 ausgebildete Formkavität einer Gussform eingebracht. Derartige Gussformen setzen sich aus mehreren, insbesondere aus zwei Formteilen zusammen, wobei die Spikepins jeweils mit ihrem den Spikekörper 1 überragenden Schaftabschnitt 5a an einem Formteil gehalten werden. Der in der geschlossenen Gussform positionierte Spikepin 2 reicht im Wesentlichen bis auf das Niveau des den Fußteil 4 ausformenden Bereiches der Formkavität.

Der Spikepin 2 wird mit einem Verstärkungsfasern enthaltenden flüssigen Kunststoff umgossen, welcher im ausgehärteten Zustand den Spikekörper 1 bildet. Als Kunststoffe eignen sich Duroplaste oder Kunststoffschmelzen aus Thermopasten. Es kommen daher beispielsweise Epoxidharz, ungesättigtes Polyesterharz, Vinylesterharz, Phenol-Formaldehydharz, Diallylphthalatharz, Methacrylatharz, Polyurethan, Aminoharze, Melaminharz oder Harnstoffharz in Frage, sowie als thermoplastische Kunststoffe Polyvinylchlorid (PVC), Polyethylen (PE), Polypropylen (PP), Polyamid (PA), Polyoxymethylen (POM), Polyethylenterephthalat (PET), Polytetrafluorethylen (PTFE), Polyvinylidenfluorid (PVDF), Ethylenchlortrifluorethylen (ECTFE), Perfluoralkoxy-Polymer (PFA), Polyfluorethylenpropylen (FEP), Tetrafluorethylen-Perfluor-Methylvinylether (MFA), Polyetheretherketon (PEEK), Polyetherimid (PEI), Polyethersulfon (PES), Polysulfon (PSU), Polyphenylensulfid (PPS), Polycarbonat (PC) oder Acrylnitril-Butadien-Styrol (ABS). Als Verstärkungsfasern werden vorzugsweise organische Verstärkungsfasern wie insbesondere Aramidfasern, Kohlenstofffasern, Polyesterfasern, Nylonfasern, Polyethylenfasern oder Plexiglasfasern eingesetzt. Ferner können auch anorganische Verstärkungsfasern, wie beispielsweise Basaltfasern, Borfasern, Glasfasern, Keramikfasern oder Kieselsäurefasern, welche sich insbesondere durch ihre hohe Temperaturbeständigkeit auszeichnen, eingesetzt werden. Die Fasern sind Kurzfasern mit einer durchschnittlichen Länge von beispielsweise 0,5 mm.

Es ist üblich, die Kunststoffmatrix neben den oben genannten Verstärkungsfasern mit zusätzlichen, in ihrer Größenordnung um ein Vielfaches kleineren Füllkörpern aus verschiedenen Stoffen zu füllen. Dazu gehören beispielsweise mineralische Füllstoffe wie Glimmer, Al₂O₃ und Wollastonit, welche häufig in Plättchenform eingesetzt werden und sich in ihrer Ausrichtung beim Vernetzen bzw. Erstarren der Kunststoffmatrix ähnlich zu den Verstärkungsfasern verhalten. Es können aber auch zu geringen Anteilen kugelförmige Verstärkungskörper zur Druckfestigkeitssteigerung eingesetzt werden, beispielsweise Glasperlen.

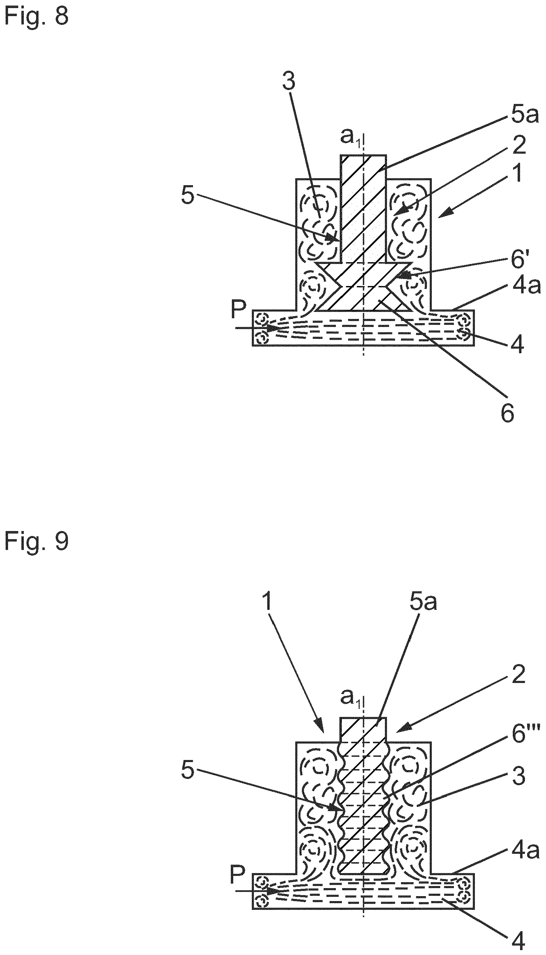

In Fig. 8 ist der Vorgang des Umgießens exemplarisch für einen gemäß Fig. 2 ausgeführten Spikepin 2 angedeutet. Fig. 9 zeigt eine zu Fig. 8 analoge Darstellung mit einem gemäß Fig. 4 gestalteten Spikepin 2. Der an der Randmitte des den Fußteil 4 bildenden Formkavitätsbereiches befindliche Anspritzpunkt, welcher jener Punkt ist, an welchem das Kunststoffmaterial in die Formkavität eingespritzt wird, ist in Fig. 8 und Fig. 9 jeweils durch einen Pfeil P gekennzeichnet. Wie der Pfeil P ferner andeutet, wird das Kunststoffmaterial im Wesentlichen senkrecht zum Spikepin 2 eingespritzt. Die die Strömung des Kunststoffmaterials in der Formkavität versinnbildlichenden Stromlinien sind durch eine Vielzahl kurzer Linien angedeutet, welche nach dem Aushärten des Kunststoffmaterials zumindest im Wesentlichen der Orientierung der Verstärkungsfasern im Spikekörper 1 des fertigen Spikes entsprechen.

Aufgrund der speziellen Geometrie und der Position der Verankerungselemente 6, 6', 6", 6"', 6^{IV} wird das Kunststoffmaterial beim Einströmen derart verwirbelt, dass dieses den den Hauptkörperteil 3 ausformenden Bereich der Formkavität turbulent durchströmt, wodurch die im Kunststoff vorhandenen Verstärkungsfasern in diesem Bereich stochastisch - d.h. zufällig und orientierungslos - angeordnet werden. Der Zentralbereich - im Wesentlichen der Bereich unterhalb des Hauptkörperteiles 3 - des den Fußteil 4 ausformenden Formkavitätsbereiches wird vom Kunststoffmaterial im Wesentlichen laminar, d.h. verwirbelungsfrei, durchströmt, sodass sich die Mehrheit der Verstärkungsfasern im Wesentlichen senkrecht bzw. unter einem spitzen Winkel zum Spikepin 2 ausrichtet. Der radial äußere Randbereich des den Fußteil 4 ausformenden Formkavitätsbereiches wird vom Kunststoffmaterial turbulent durchströmt, sodass sich die Verstärkungsfasern in diesem Randbereich weitgehend orientierungslos anordnen.

Die weitgehend senkrecht zum Spikepin 2 ausgerichteten Verstärkungsfasern im zentralen Bereich des Fußteiles 4 verleihen dem Fußteil 4 anisotrope, d.h. richtungsabhängige, Werkstoffeigenschaften und ermöglichen eine maximale Druckfestigkeit gegenüber den auf den Spike wirkenden statischen und dynamischen Axialkräften.

Auf den Hauptkörperteil 3 wirken aus unterschiedlichen Richtungen Stoß- und Scherbelastungen, welche durch die im Hauptkörperteil 3 orientierungslos angeordneten Verstärkungsfasern und den damit verbundenen isotropen, d.h. richtungsunabhängigen, Werkstoffeigenschaften optimal vom Hauptkörperteil 3 aufgenommen werden können.

Durch die spezielle Ausrichtung der Fasern sind erfindungsgemäße Spikes bedarfsgerecht verstärkt.

An der Außenseite des Spikepins 2 können vor dem Gussvorgang zusätzlich, beispielsweise Chromverbindungen enthaltende, Haftvermittler aufgebracht werden, um den Halt des Spikepins 2 im Spikekörper 1 noch weiter zu verbessern. Ferner kann der Spikekörper 1 eine andere, insbesondere eine bei Spikekörpern übliche Außenkontur aufweisen.

### Bezugsziffernliste

- 1: Spikekörper
- 2: Spikepin
- 3: Hauptkörperteil
- 4: Fußteil
- 4a: Begrenzungsfläche
- 5: Pinschaft
- 5a: Schaftabschnitt
- 6, 6', 6", 6"', 6^{IV}: Verankerungselement
- a₁: Spikeachse
- a₂: Abstand
- D, d₁, d₂, d₃: Durchmesser
- H: Pinhöhe
- h₁, h₂: Höhe

## Patentansprüche

1. Spike für einen Fahrzeugluftreifen mit einem Spikekörper (1) aus einem Verstärkungsfasern enthaltenden Kunststoff und einem im Spikekörper (1) positionierten, aus dem Spikekörper (1) herausragenden Spikepin (2) aus Hartmetall, wobei der Spikekörper (1) einen Hauptkörperteil (3) und einen den Hauptkörperteil (3) seitlich überragenden Fußteil (4) aufweist,
**dadurch gekennzeichnet,**
**dass** der Spikepin (2) im Spikekörper (1) im Wesentlichen bis zum Niveau des Fußteiles (4) reicht und einen Pinschaft (5) mit zumindest einem Verankerungselement (6, 6'. 6", 6"', 6^{IV}) aufweist, welches den radial inneren Endbereich des Pinschaftes (5) verbreitert, wobei die Verstärkungsfasern im zentralen Bereich des Fußteiles (4) hauptsächlich und im Wesentlichen senkrecht zum Spikepin (2) ausgerichtet sind und im Hauptkörperteil (3) hauptsächlich orientierungslos angeordnet sind.

2. Spike nach Anspruch 1, **dadurch gekennzeichnet, dass** der Pinschaft (5) mehrere Verankerungselemente (6', 6", 6"', 6^{IV}) aufweist.

3. Spike nach Anspruch 1 oder 2, **dadurch gekennzeichnet, dass** zumindest ein Verankerungselement (6, 6', 6", 6"') den Pinschaft (5) umgibt.

4. Spike nach einem der Ansprüche 1 bis 3, **dadurch gekennzeichnet, dass** der Pinschaft (5) zumindest ein Verankerungselement (6, 6', 6") aufweist, welches den Pinschaft (5) umgibt und sich über seine Erstreckung entlang des Pinschaftes (5) konisch verbreitert.

5. Spike nach Anspruch 4, **dadurch gekennzeichnet, dass** das sich konisch verbreiternde Verankerungselement (6, 6', 6") eine Höhe (h₁) von 10% bis 15% der Pinhöhe (H) aufweist.

6. Spike nach Anspruch 4 oder 5, **dadurch gekennzeichnet, dass** das sich konisch verbreiternde Verankerungselement (6, 6', 6") kegelstumpfförmig ausgebildet ist.

7. Spike nach einem der Ansprüche 4 bis 6, **dadurch gekennzeichnet, dass** ein sich konisch verbreiterndes Verankerungselement (6) am inneren Endbereich des Pinschaftes (5) ausgebildet ist.

8. Spike nach Anspruch 1 oder 2, **dadurch gekennzeichnet, dass** am inneren Endbereich des Pinschaftes (5) mehrere als Vorsprünge ausgebildete Verankerungselemente (6^{IV}) vorgesehen sind.

9. Spike nach einem der Ansprüche 1 bis 3, **dadurch gekennzeichnet, dass** der Pinschaft (5) mehrere Verankerungselemente (6"') aufweist, welche an der Außenseite des Pinschaftes (5) ausgebildete, diesen quer umlaufende und abwechselnd vorgesehene, insbesondere gleich dimensionierte Erhebungen und Vertiefungen sind.

10. Spike nach Anspruch 9, **dadurch gekennzeichnet, dass** der quer zur Erstreckung des Pinschaftes (5) ermittelte Abstand (a₂) zwischen der tiefsten Stelle der Vertiefungen und der höchsten Stelle der Erhebungen 0,2 mm bis 0,5 mm beträgt.

11. Spike nach einem der Ansprüche 1 bis 10, **dadurch gekennzeichnet, dass** der zentrale Bereich des Fußteiles (4), in welchem die Verstärkungsfasern hauptsächlich im rechten Winkel zum Spikepin (2) ausgerichtet sind, sich im Wesentlichen über den Bereich unterhalb des Hauptkörperteils (3) erstreckt.

12. Spike nach einem der Ansprüche 1 bis 11, **dadurch gekennzeichnet, dass** der Spikekörper (1) aus einem Duroplast oder einem Thermoplast hergestellt ist.

13. Spike nach einem der Ansprüche 1 bis 12, **dadurch gekennzeichnet, dass** der Spikekörper als Verstärkungsfasern organische Verstärkungsfasern, insbesondere Aramidfasern, Kohlenstofffasern, Polyesterfasern, Nylonfasern, Polyethylenfasern oder Plexiglasfasern enthält.

14. Spike nach einem der Ansprüche 1 bis 13, **dadurch gekennzeichnet, dass** der Spikekörper (1) zusätzlich plättchen- oder kugelförmige Füllkörper oder Füllstoffe enthält, beispielsweise mineralische Füllstoffe, wie Glimmer, Al₂O₃ oder Wollastonit.

15. Spike nach einem der Ansprüche 1 bis 13, **dadurch gekennzeichnet, dass** der Spikekörper (1) zusätzlich kugelförmige Verstärkungskörper enthält, beispielsweise Glasperlen.

16. Verfahren zur Herstellung eines Spikes für einen Fahrzeugluftreifen mit einem Spikekörper (1) aus einem Verstärkungsfasern enthaltenden Kunststoff und einem im Spikekörper (1) positionierten, aus dem Spikekörper (1) herausragenden Spikepin (2) aus Hartmetall, wobei der Spikekörper (1) einen Hauptkörperteil (3) und einen den Hauptkörperteil (3) seitlich überragenden Fußteil (4) aufweist,
**dadurch gekennzeichnet,**
**dass** ein Spikepin (2), welcher zumindest ein an seinem radial inneren Endbereich ausgebildetes und den Spikepin (2) seitlich überragendes Verankerungselement (6, 6', 6", 6"') aufweist, in einer gemäß dem herzustellenden Spikekörpers (1) ausgebildeten Formkavität einer Gussform positioniert wird, wobei der in der geschlossenen Gussform positionierte Spikepin (2) im Wesentlichen bis zum Niveau des den Fußteil (4) ausformenden Bereiches der Formkavität reicht,
wobei anschließend ein Verstärkungsfasern enthaltendes flüssiges Kunststoffmaterial im Wesentlichen senkrecht zum Spikepin (2) an der Randmitte des den Fußteil (4) bildenden Formkavitätsbereiches eingespritzt wird, wobei das Kunststoffmaterial den den Fußteil (4) bildenden Formkavitätsbereich laminar und den den Hauptkörperteil (3) ausformenden Bereich der Formkavität im Wesentlichen turbulent durchströmt und dabei auffüllt.

17. Verfahren nach Anspruch 16, **dadurch gekennzeichnet, dass** das flüssige Kunststoffmaterial ein Duroplast oder ein Thermoplast ist.

## Claims

1. Spike for a pneumatic vehicle tire, having a spike body (1) which is composed of a plastic comprising strengthening fibres, and having a spike pin (2) which is positioned in the spike body (1) and which projects out of the spike body (1) and which is composed of hard metal, wherein the spike body (1) has a main body part (3) and a foot part (4) which projects laterally beyond the main body part (3),
**characterized**
**in that** the spike pin (2) extends in the spike body (1) substantially as far as the level of the foot part (4) and has a pin shank (5) with at least one anchoring element (6, 6', 6'', 6''', 6^{IV}) which widens the radially inner end region of the pin shank (5), wherein the strengthening fibres in the central region of the foot part (4) are oriented predominantly and substantially perpendicular to the spike pin (2), and those in the main body part (3) are arranged predominantly in a random orientation.

2. Spike according to Claim 1, **characterized in that** the pin shank (5) has multiple anchoring elements (6', 6'', 6''', 6^{IV}) .

3. Spike according to Claim 1 or 2, **characterized in that** at least one anchoring element (6, 6', 6'', 6''') surrounds the pin shank (5).

4. Spike according to one of Claims 1 to 3, **characterized in that** the pin shank (5) has at least one anchoring element (6, 6', 6'') which surrounds the pin shank (5) and which conically widens over its extent along the pin shank (5).

5. Spike according to Claim 4, **characterized in that** the conically widening anchoring element (6, 6', 6'') has a height (h₁) of 10% to 15% of the pin height (H).

6. Spike according to Claim 4 or 5, **characterized in that** the conically widening anchoring element (6, 6', 6'') is of frustoconical form.

7. Spike according to one of Claims 4 to 6, **characterized in that** a conically widening anchoring element (6) is formed on the inner end region of the pin shank (5).

8. Spike according to Claim 1 or 2, **characterized in that** multiple anchoring elements (6^{IV}) formed as projections are provided on the inner end region of the pin shank (5).

9. Spike according to one of Claims 1 to 3, **characterized in that** -the pin shank (5) has multiple anchoring elements (6''') which are elevations and depressions formed on the outer side of the pin shank (5), which elevations and depressions are provided so as to transversely encircle said pin shank and in alternating fashion and are in particular of identical dimensions.

10. Spike according to Claim 9, **characterized in that** the spacing (a₂), measured transversely with respect to the extent of the pin shank (5), between the lowest point of the depressions and the highest point of the elevations amounts to 0.2 mm to 0.5 mm.

11. Spike according to one of Claims 1 to 10, **characterized in that** the central region of the foot part (4), in which the strengthening fibres are oriented predominantly at right angles with respect to the spike pin (2), extends substantially over the region below the main body part (3).

12. Spike according to one of Claims 1 to 11, **characterized in that** the spike body (1) is produced from a thermoset or a thermoplastic.

13. Spike according to one of Claims 1 to 12, **characterized in that**, as strengthening fibres, the spike body comprises organic strengthening fibres, in particular aramid fibres, carbon fibres, polyester fibres, nylon fibres, polyethylene fibres or Plexiglas fibres.

14. Spike according to one of Claims 1 to 13, **characterized in that** the spike body (1) additionally comprises platelet-like or spherical filler bodies or filler substances, for example mineral filler substances such as mica, Al₂O₃ or wollastonite.

15. Spike according to one of Claims 1 to 13, **characterized in that** the spike body (1) additionally comprises spherical strengthening bodies, for example glass beads.

16. Method for producing a spike for a pneumatic vehicle tire, having a spike body (1) which is composed of a plastic comprising strengthening fibres, and having a spike pin (2) which is positioned in the spike body (1) and which projects out of the spike body (1) and which is composed of hard metal, wherein the spike body (1) has a main body part (3) and a foot part (4) which projects laterally beyond the main body part (3),
**characterized**
**in that** a spike pin (2), which has at least one anchoring element (6, 6', 6'', 6''') formed on its radially inner end region and projecting laterally beyond the spike pin (2) is positioned in a mould cavity, formed in accordance with the spike body (1) to be produced, of a casting mould,
wherein the spike pin (2) positioned in the closed casting mould extends substantially as far as the level of that region of the mould cavity which forms the foot part (4),
wherein, subsequently, a liquid plastics material comprising strengthening fibres is injected, substantially perpendicular to the spike pin (2), at the centre of the edge of the mould cavity region that forms the foot part (4), wherein the plastics material laminarly flows through and fills that mould cavity region which forms the foot part (4), and substantially turbulently flows through and fills that region of the mould cavity which forms the main body part (3).

17. Method according to Claim 16, **characterized in that** the liquid plastics material is a thermoset or a thermoplastic.

## Revendications

1. Clou pour un pneumatique de véhicule comprenant un corps de clou (1) constitué d'une matière plastique contenant des fibres de renforcement et d'une broche de clou (2) en métal dur, positionnée dans le corps de clou (1) et faisant saillie hors du corps de clou (1), le corps de clou (1) présentant une partie de corps principale (3) et une partie de base (4) faisant saillie latéralement au-delà de la partie de corps principale (3),
**caractérisé en ce que**
la broche de clou (2) s'étend dans le corps de clou (1) essentiellement jusqu'au niveau de la partie de base (4) et présente une tige de broche (5) avec au moins un élément d'ancrage (6, 6', 6'', 6''', 6^{IV}) qui élargit la région d'extrémité radialement intérieure de la tige de broche (5), les fibres de renforcement dans la région centrale de la partie de base (4) étant orientées principalement et essentiellement perpendiculairement à la broche de clou (2) et étant disposées dans la partie de corps principal (3) principalement sans orientation.

2. Clou selon la revendication 1, **caractérisé en ce que** la tige de broche (5) présente plusieurs éléments d'ancrage (6', 6'', 6''', 6^{IV}).

3. Clou selon la revendication 1 ou 2, **caractérisé en ce qu'**au moins un élément d'ancrage (6, 6', 6'', 6''') entoure la tige de broche (5).

4. Clou selon l'une quelconque des revendications 1 à 3, **caractérisé en ce que** la tige de broche (5) présente au moins un élément d'ancrage (6, 6', 6'') qui entoure la tige de broche (5) et qui s'élargit sous forme conique sur son étendue le long de la tige de broche (5).

5. Clou selon la revendication 4, **caractérisé en ce que** l'élément d'ancrage (6, 6', 6'') s'élargissant sous forme conique présente une hauteur (h₁) de 10 % à 15 % de la hauteur de la broche (H).

6. Clou selon la revendication 4 ou 5, **caractérisé en ce que** l'élément d'ancrage (6, 6', 6'') s'élargissant sous forme conique est réalisé sous forme tronconique.

7. Clou selon l'une quelconque des revendications 4 à 6, **caractérisé en ce qu'**un élément d'ancrage (6) s'élargissant sous forme conique est réalisé au niveau de la région d'extrémité intérieure de la tige de broche (5).

8. Clou selon la revendication 1 ou 2, **caractérisé en ce que** plusieurs éléments d'ancrage (6^{IV}) réalisés sous forme de saillies sont prévus au niveau de la région d'extrémité intérieure de la tige de broche (5) .

9. Clou selon l'une quelconque des revendications 1 à 3, **caractérisé en ce que** la tige de broche (5) présente plusieurs éléments d'ancrage (6''') qui sont des rehaussements et des renfoncements réalisés au niveau du côté extérieur de la tige de broche (5), entourant celle-ci transversalement et prévus en alternance, en particulier de mêmes dimensions.

10. Clou selon la revendication 9, **caractérisé en ce que** la distance (a₂) déterminée transversalement à l'étendue de la tige de broche (5) entre le point le plus bas des renfoncements et le point le plus haut des rehaussements est comprise entre 0,2 mm et 0,5 mm.

11. Clou selon l'une quelconque des revendications 1 à 10, **caractérisé en ce que** la région centrale de la partie de base (4) dans laquelle les fibres de renforcement sont orientées principalement à angle droit par rapport à la broche de clou (2) s'étend essentiellement sur la région en dessous de la partie de corps principale (3).

12. Clou selon l'une quelconque des revendications 1 à 11, **caractérisé en ce que** le corps de clou (1) est fabriqué à partir d'un plastique thermodurcissable ou d'un thermoplastique.

13. Clou selon l'une quelconque des revendications 1 à 12, **caractérisé en ce que** le corps de clou contient, en tant que fibres de renforcement, des fibres de renforcement organiques, en particulier des fibres d'aramide, des fibres de carbone, des fibres de polyester, des fibres de nylon, des fibres de polyéthylène ou des fibres de plexiglas.

14. Clou selon l'une quelconque des revendications 1 à 13, **caractérisé en ce que** le corps de clou (1) contient en outre des corps de remplissage ou des charges en forme de plaquettes ou de billes, par exemple des charges minérales, telles que du mica, du Al₂O₃ ou de la Wollastonite.

15. Clou selon l'une quelconque des revendications 1 à 13, **caractérisé en ce que** le corps de clou (1) contient en outre des corps de renforcement sphérique, par exemple des perles de verre.

16. Procédé de fabrication d'un clou pour un pneumatique de véhicule comprenant un corps de clou (1) constitué d'une matière plastique contenant des fibres de renforcement et d'une broche de clou (2) en métal dur, positionnée dans le corps de clou (1) et faisant saillie hors du corps de clou (1), le corps de clou (1) présentant une partie de corps principale (3) et une partie de base (4) faisant saillie latéralement au-delà de la partie de corps principale (3),
**caractérisé en ce**
**qu'**une broche de clou (2) qui présente au moins un élément d'ancrage (6, 6', 6'', 6''') réalisé au niveau de sa région d'extrémité radialement intérieure et faisant saillie latéralement au-delà de la broche de clou (2), est positionnée dans une cavité de moule d'un moule de coulée réalisée en fonction du corps de clou (1) à fabriquer, la broche de clou (2) positionnée dans le moule de coulée fermé s'étendant essentiellement jusqu'au niveau de la région de la cavité de moule formant la partie de base (4),
une matière plastique liquide contenant des fibres de renforcement étant ensuite injectée essentiellement perpendiculairement à la broche de clou (2) au niveau du centre du bord de la région de la cavité de moule formant la partie de base (4), la matière plastique s'écoulant à travers la région de la cavité du moule formant la partie de base (4) sous forme laminaire et à travers la région formant la partie de corps principale (3) de la cavité de moule de manière essentiellement turbulente et les remplissant.

17. Procédé selon la revendication 16, **caractérisé en ce que** la matière plastique liquide est un plastique thermodurcissable ou un thermoplastique.
